# EUROPEAN PATENT APPLICATION

(11) **EP 1 942 671 A1**
(43) Date of publication of application: **09.07.2008**
(21) Application number: 06796676.2
(22) Date of filing: 23.08.2006
(51) Int. Cl.: H04N 5/91, G06F 17/30, G10L 11/00, G10L 15/10, G11B 20/10, G11B 27/00, G11B 27/10

(54) **DIGEST CREATING DEVICE AND ITS PROGRAM**

(30) Priority: 30.09.2005 JP 2005287325
(71) Applicant: Pioneer Corporation, Tokyo 153-8654 (JP)
(72) Inventor: HASHIMOTO, Shinya, Saitama 359-8522 (JP); NAKAMURA, Harumi, Saitama 359-8522 (JP)
(74) Representative: Haley, Stephen
(86) International application number: PCT/JP2006/316512
(87) International publication number: WO 2007/039995

(57) **Abstract**

The present invention is directed to provide a digest generating device and a program therefor that can generate an appropriate digest depending on the type of a content.

The digest generating device includes a content acquiring section 20 for acquiring a content including at least one of video information and audio information and content associated information associated with the content, a content type judging unit 32 for judging a content type categorized according to what is in the content based on the content associated information, a target segment deciding unit 33 for deciding a target segment from the entire content segment of the content depending on judgment of the content type judging unit, a partial scene extracting unit 34 for extracting a partial scene being an element for generating a digest of the content from the decided target segment, and a digest generating unit 35 for generating the digest by using the extracted partial scene.

## Description

### TECHNICAL FIELD

The present invention relates to a digest generating device and a program therefor for generating a digest of a content including at least one of video information and audio information.

### BACKGROUND ART

In recent years, some recording and playback devices used for recording and playing back contents (such as television broadcast programs) including video information and audio information are known to generate and play back digests in which recorded contents are summarized. Because this digest playback can focus on playing back characteristic scenes such as a highlight scene in the recorded content, the digest playback has been used when a user wants to roughly understand what is in the content in a short period of time or for searching a program that he/she wants to watch.

In generating a digest, various proposals have been made as a method of extracting characteristic scenes. For example, in Patent Document 1 and Patent Document 2, a representative frame is extracted according to a frame in which a face region in an image exists, a frame with discontinuous images (frame after a scene change), and the like, and the digest is played back starting from the representative frame. Patent Document 3 focuses on audio information included in a content, and when a segment higher than a reference audio level to be referenced has continued for a predetermined period of time, the digest is played back by extracting the segment higher than the reference audio level.
[Patent Document 1] JP-A-2003-283993
[Patent Document 2] JP-A-9-312827
[Patent Document 3] JP-A-10-32776

### DISCLOSURE OF THE INVENTION

### Subject to be Solved by the Invention

However, the digest playback methods disclosed in the above-mentioned patent documents all extract characteristic scenes such as a frame in which a face region exists or a segment with a high audio level. Accordingly, there is a possibility that a scene of which a user does not desire may be included depending on the contents of programs. For example, the result of a game may be included in the digest when a sport program was recorded, and the end may be included in the digest when a drama was recorded. Therefore, as a digest of a program that has a plot, the playback of the digest that is close to a so-called program preview within the range that the conclusion of the content cannot be learned has been sought after.

In view of the above-described problems, the present invention provides a digest generating device and a program therefor that can generate an appropriate digest depending on what is in the content or the category of the content.

### Means for Solving the Problem

A digest generating device according to the present invention includes content acquiring means that acquires a content including at least one of video information and audio information and content associated information associated with the content, content type judging means that judges a content type categorized according to what is in the content based on the content associated information, target segment deciding means that decides a target segment from the entire content segment, in full or part thereof, along the time axis of the content depending on judgment of the content type judging means, partial scene extracting means that extracts a partial scene being an element for generating a digest of the content from the decided target segment, and digest generating means that generates the digest by using the extracted partial scene.

With this configuration, a target segment from which a partial scene is to be extracted for creating the digest of a content can be decided depending on the type of the content. Accordingly, if the content has a plot, like a sport program or drama, the target segment can be set to be the first half of the content, thereby preventing the end of the plot from being included in the digest. Therefore, an appropriate digest can be generated depending on the content type.

The "content" includes a content formed by video information and audio information (such as television programs), a content only formed by video information (such as silent movies), and a content only formed by audio information (such as music and radio programs). The "content type" is categorized by various criteria, such as what is in the content, the category, cast, or the broadcast date and time of the content. The "digest" refers to summarized information in which what is in the content is summarized.

In the digest generating device, it is preferable that the target segment be a segment starting from start of the content and lasting for a time period calculated by multiplying the entire content segment by a constant β (0<β≤1), and the target segment deciding means decide the target segment based on the constant β that is valuable depending on the content type judged by content type judging means.

With this configuration, if the content has a plot, the target segment from which partial scenes are to be extracted can be limited to the first half, which can be identified by the constant β. In addition, since the constant β is valuable based on the content type, an appropriate target section depending on what is in the content can be decided.

In the digest generating device, it is preferable that the partial scene extracting means extract a partial scene having a segment length of a predetermined time period tp (tp>0), and the predetermined time period tp be valuable depending on the content type judged by content type judging means.

With this configuration, a partial scene having an appropriate length depending on, for example, what is in the content can be extracted. For example, if the content is a music program, a partial scene of some three to five seconds will show who appears in the scene. If the content is a sport program, a partial scene of some ten seconds will show the outline of the program through scenes including ball passes or pitching or comments of commentators, for example.

It is preferable that the digest generating device further include highlight segment searching means that searches a highlight segment including a highlight scene from the entire content segment based on at least one of the video information and the audio information, and the partial scene extracting means extract the partial scene from the remaining segment excluding the highlight segment from the target segment.

With this configuration, a partial scene is extracted from the remaining segment excluding a highlight segment including a highlight scene from the entire content segment, and therefore the highlight scene will not be included in the digest. Accordingly, a viewing incentive of a viewer will not be discouraged by viewing the generated digest that shows the conclusion of the content. The "highlight scene" refers to characteristic scenes of the content such as a scene that fascinates the viewer most and an exciting scene, for example, the result of a sport program and the end of a drama. Related-art techniques such as a method of extracting a scene in which a face region is included in a video or a method of extracting a scene of which the audio level or the sound pressure level exceeds a reference value may be used for searching the highlight scene (highlight segment).

It is preferable that the digest generating device further include content recording means that records the acquired content, and playback means that plays back the recorded content, and the partial scene extracting means judge whether the recorded content has been played back, extract the partial scene from the remaining segment excluding the highlight segment from the target segment when judging that the content has not been played back, and extract the partial scene including the highlight segment when judging that the content has been played back.

With this configuration, the way in which partial scenes are extracted can be changed depending on whether the recorded content has been played back. In other words, an appropriate digest can be generated depending on whether the content has been played back, since partial scenes are extracted in a manner to avoid highlight scenes so as not to discourage a viewing incentive of a viewer if the content has not been played back, whereas partial scenes including highlight scenes are extracted so as to facilitate understanding on the content if the content has been played back.

It is preferable that the digest generating device further include digest playback means that plays back a digest, the digest generating means generate digest playback information formed by segment data that indicates an address of the start of the extracted partial scene and the segment length of the partial scene, and the digest playback means play back the digest based on the recorded data of the content by the content recording means and the digest playback information.

With this configuration, the digest can be played back by reading out the partial scene that corresponds to the digest playback information from the recorded data of the content. In other words, there is no need to save data for the digest that is an extract of a part of the recorded data of the content separately from the recorded data of the content. Because only the segment data that indicates the address of the start of the partial scene and its segment length need to be saved, the memory usage for saving the digest can be reduced.

In the digest generating device, it is preferable that the content acquiring means acquire metadata recorded for each scene in the content as at least part of the content associated information.

With this configuration, the content type can be judged at least based on the metadata. The "metadata" not only includes information related to the description of what is in the entire content, the creator, the copyright, and the like, but also the detailed information of each scene included in the content.

It is preferable that the digest generating device further include EPG receiving means that receives EPG data, and the content acquiring means acquire program information included in the EPG data as at least part of the content associated information.

With this configuration, the content type can be judged at least based on the program information (program listing information) included in the EPG data (electric program guide).

In this case, it is preferable that the content include audio information, the digest generating device further include low sound pressure segment searching means that searches a low sound pressure segment where the sound pressure level calculated based on the audio information is at or below a predetermined low sound threshold value, and non-program material scene extracting means that extracts a non-program material scene including a commercial scene based on the search result of the low sound segment searching means, the partial scene extracting means extract a predetermined segment immediately after the extracted non-program material scene as a partial scene when the content type judging means judges that the acquired content is categorized as a predetermined content type.

With this configuration, the non-program material scene including a commercial scene is extracted based on the detected low sound pressure segment, and the predetermined segment immediately after the non-program material scene can be set as a target segment depending on the content type. For example, when the content is a cartoon program and the like, a title and a subtitle of the cartoon are often displayed immediately after commercial messages. By including the predetermined segment immediately after commercial messages in the digest, the viewer can understand the contents more accurately.

In the digest generating device, it is preferable that the digest generating means rearrange, when generating the digest by using a plurality of partial scenes, the plurality of partial scenes in chronological order.

With this configuration, the extracted plurality of partial scenes are rearranged in chronological order.
Therefore, when the digest is played back, a sense of incongruity caused by continuously playing back partial scenes getting out of sequence can be removed. As a result, a digest closer to a program preview can be generated.

A program according to the present invention realizes functions of each means in the digest generating device.

By using the program, it is possible to realize the digest generating device that can generate an appropriate digest depending on what is in the content and the category of the content.

### BRIEF DESCRIPTION OF THE DRAWINGS

Fig. 1 is a block configuration diagram of a recording and playback device according to a first embodiment of the present invention.
Fig. 2 is a waveform diagram of a sound pressure level for explaining a method of extracting a partial scene out of a subject segment.
Fig. 3 is a flowchart showing a process of searching a high sound pressure segment.
Fig. 4 is a flowchart showing a process of generating a digest according to the first embodiment.
Fig. 5 is a waveform diagram of a sound pressure level for explaining another method of extracting a partial scene.
Fig. 6 is a waveform diagram of a sound pressure level for explaining a method of extracting overlapped partial scenes.
Fig. 7 is a waveform diagram of a sound pressure level for explaining another method of determining a priority of the partial scene.
Fig. 8 is a block configuration diagram of a recording and playback device according to a second embodiment.
Fig. 9 is a waveform diagram of a sound pressure level for explaining an method of extracting an important partial scene immediately after a non-program material scene according to the second embodiment.
Fig. 10 is a flowchart showing a process of generating a digest according to the second embodiment.

### Description of Reference Numerals

- 10: Recording and playback device
- 20: Content acquiring section
- 30: Control section
- 40: Audio analysis section
- 50: Storage section
- 60: Playback section
- 61: Content playback unit
- 62: Digest playback unit
- 81: Receiving antenna
- 82: External equipment
- 91: Display device
- 92: UI input device
- DCs: Start of a non-program material scene
- DCe: End of a non-program material scene
- Ds: Start of an entire content segment
- De: End of an entire content segment
- DHs: Start of a high sound pressure segment
- DHe: End of a high sound pressure segment
- DPs: Start of a partial scene
- DPe: End of a partial scene
- DPis: Start of an important partial scene
- DPie: End of an important partial scene
- hl: Segment length of a high sound pressure segment
- tp: Segment length of a partial scene
- T: Total of segment lengths
- THb: High sound threshold value
- THs: Low sound threshold value

### BEST MODES FOR CARRYING OUT THE INVENTION

Exemplary embodiments of a digest generating device and a program therefor according to the present invention will now be explained in detail below with reference to the accompanying drawings. The present invention has been made in view of determining a target segment from which a partial scene that is an element for generating a digest of a content, including video information (video signals) and/or audio information (audio signals), is extracted depending on the type of the content. An example of applying the digest generating device according to the present invention to a recording and playback device that records and plays back a content including video information and audio information will now be explained.

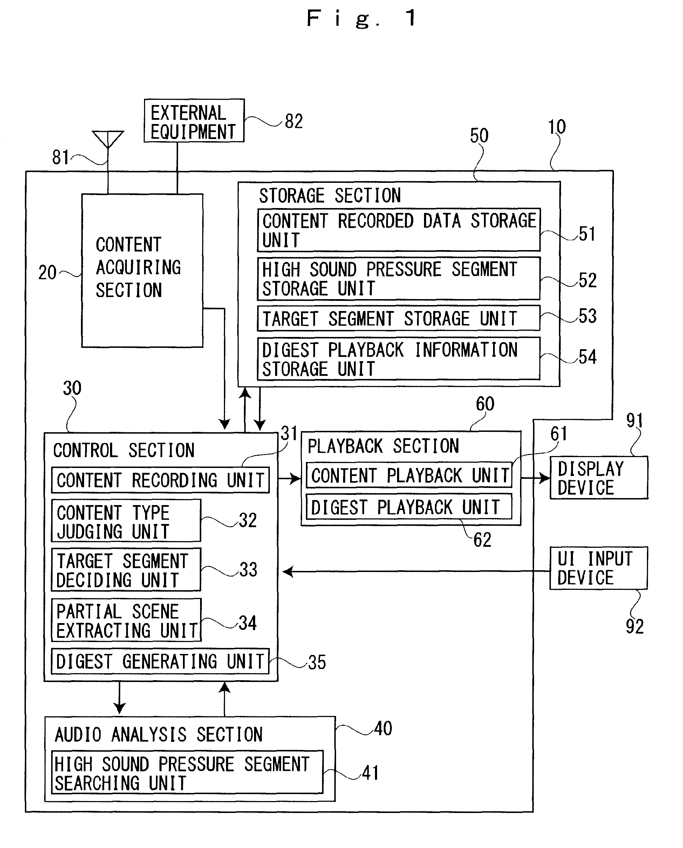

Fig. 1 is a block configuration diagram of a recording and playback device 10 according to an embodiment of the present invention. As shown in the diagram, the recording and playback device 10 includes a content acquiring section 20 for acquiring a content including video information and audio information and content associated information (e.g. metadata) associated with the content from outside, a control section 30 for carrying out various controls, an audio analysis section 40 for carrying out analysis based on the audio information, a storage section 50 for storing various information, and a playback section 60 for playing back a content and a digest. The "digest" refers to summarized information in which what is in the content is summarized.

A main component of the content acquiring section 20 is a so-called tuner to receive a television broadcast such as terrestrial broadcast, BS, or CS through a receiving antenna 81. To acquire a content from external equipment 82 (such as a television set, a video playback device, a DVD playback device, a personal computer, and various tuners that include an external output terminal), an external input terminal is the main component. Although not shown, the content acquiring section 20 can also acquire video/music data distributed via a communication network such as the Internet as a content. In this case, an Internet connection part is the main component. When various semiconductor memory or various optical disk readers are installed as the content acquiring section 20, a content recorded therein can also be acquired.

The content acquiring section 20 acquires, along with a content including video information and audio information, content associated information used for identifying the type of the content (i.e., information indicating a program category, such as movie, drama, sport, news, and music). The content associated information includes metadata (information on scenes included in the content as well as information on what is in the content, program generators, and copyright) or program information (program listing information) of electric program guide (EPG) data distributed with the content in TV broadcasting.

It is therefore a prerequisite of the present embodiment that all types of the contents received via the receiving antenna 81, acquired from the external equipment 82, distributed through networks, such as the Internet, or read out by semiconductor memory or optical disk readers are with at least one of metadata, program information of EPG data, and other information for identifying the content type.

The control section 30 carries out various controls by controlling each section of the recording and playback device 10. More specifically, the control section 30 includes a content recording unit 31 for recording an acquired content, a content type judging unit 32 for judging a content type based on content associated information that is acquired along with the content, a target segment deciding unit 33 for deciding a target segment from which a partial scene (which is an element for generating a digest) is to be extracted depending on the content type, a partial scene extracting unit 34 for extracting a partial scene from the target segment, and a digest generating unit 35 for generating information (hereinafter, referred to as "digest playback information") to play back the digest based on the extracted partial scene.

The audio analysis section 40 includes a high sound pressure segment searching unit 41 for searching a highlight scene (= highlight segment = high sound pressure segment) from a content. The "highlight scene" refers to a characteristic scene of the content such as a scene that fascinates a viewer most and an exciting scene, for example, the result of a sport program or the end of a drama. In the present embodiment, the highlight scene is searched based on audio information. In other words, the excitement is determined by sound.

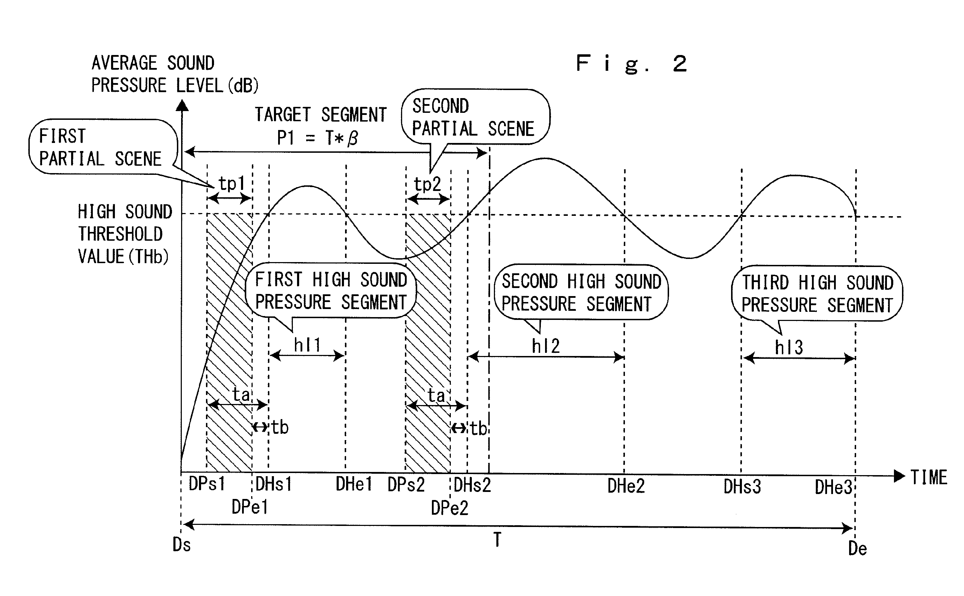

The audio analysis section 40 analyzes audio information (audio waveform information) included in the content, calculates an average sound pressure level (hereinafter, simply referred to as a "sound pressure level") per unit time, and produces a sound pressure level waveform as shown in Fig. 2, for example. The high sound pressure segment searching unit 41 searches a segment (hereinafter, referred to as a "high sound pressure segment") that is at or above a predetermined threshold value (hereinafter, referred to as a "high sound threshold value") based on the produced sound pressure level waveform.

The storage section 50 includes a content recorded data storage unit 51 for storing recorded data of the content (hereinafter, referred to as "content recorded data") recorded by the content recording unit 31, a high sound pressure segment storage unit 52 for storing the search result of the high sound pressure segment searching unit 41, a target section storage unit 53 for data indicating an address of the start of the target segment determined by the target segment deciding unit 33 and the segment length of the target segment, and a digest playback information storage unit 54 for storing digest playback information generated by the digest generating unit 35. The storage section 50 can be formed by a hard disk, various semiconductor memories, various optical disks, and the like, and the type is not limited.

The playback section 60 includes a content playback unit 61 for playing back the recorded content, and a digest playback unit 62 for playing back the digest. The content playback unit 61 plays back a content based on the content recorded data read out from the content recorded data storage unit 51, and displays the content on a display device 91. The digest playback unit 62 plays back a digest based on the digest playback information read out from the digest playback information storage unit 54 and the content recorded data, and also displays the digest on the display device 91.

A series of processes of the recording and playback device 10 formed as described above will now be explained with reference to an example of a sound pressure level waveform shown in Fig. 2. For example, when a user (viewer) instructs to record a content using a user interface (UI) input device 92 such as a remote controller, the recording and playback device 10 acquires the content via the content acquiring section 20 and records the acquired content by the content recording unit 31.

In the recording and playback device 10, the high sound pressure segment searching unit 41 searches a high sound pressure segment in synchronism with the recording of the content. More specifically, the high sound pressure segment searching unit 41 searches a high sound pressure segment where the sound pressure level is at or above a high sound threshold value (THb), and acquires the data that indicates an address of the start (DHs) and its segment length (hl). In other words, the high sound pressure segment searching unit 41 stores data indicating the addresses of the starts (DHs1, DHs2, DHs3) of the first high sound pressure segment, the second high sound pressure segment, and the third high sound pressure segment and their segment lengths (hl1, hl2, hl3) in the high sound pressure segment storage unit 52 in the example shown in Fig. 2.

When the recording of the content is finished, the content recorded data is stored in the content recorded data storage unit 51. The content type judging unit 32 judges the content type based on the content associated information (e.g. metadata, program information of EPG data) acquired along with the content. Based on the judgment, the target segment deciding unit 33 decides a target segment from which partial scenes are to be extracted. Data including the address of the start of the decided target segment and its segment length are stored in the target segment storage unit 53.

If the content type (category) is movie, drama, sport, or the like that has a plot, the target segment is set to be the first half of the entire content segment (corresponding to the recording time of the content), thereby preventing the end of the plot from being included in the digest. Specifically, as shown in Fig. 2, the target segment is set to start from a start Ds of an entire content segment (segment length: T, start: Ds, end: De) of the content and last for a segment (segment length: P1=T*β) calculated by multiplying the segment length T of the entire content segment by a constant β (0<β≤1). If the content has a plot, β is preferably about 0.5 to 0.7. If the content type is not movie, drama, or sport, the entire content segment is the target segment (β=1).

Subsequently, the partial scene extracting unit 34 extracts a partial scene to be included in a digest based on the high sound pressure segment storage unit 52. In the example of Fig. 2 with three high sound pressure segments (first high sound pressure segment to third high sound pressure segment), three partial scenes are extracted based on the starts (DHs1, DHs2, DHs3) of these high sound pressure segments. If the content type is movie, drama, or sport, since the target segment from which partial scenes are to be extracted is a segment having a segment length P1 from the start of the content as described above, partial scenes only in the segment length P1 are to be extracted.

Accordingly, extracted as partial scenes in the example of Fig. 2 are a first partial scene having a segment (segment length: tp1) from a start (DPs1) that is earlier by a predetermined time ta than the start (DHs1) of the first high sound pressure segment to an end (Dpe1) that is earlier by a predetermined time tb (ta>ta≥0) than the start (DHs1) of the first high sound pressure segment; and a second partial scene having a segment (segment length: tp2) from a start (DPs2) that is earlier by the predetermined time ta than the start (DHs2) of the second high sound pressure segment to an end (Dpe2) that is earlier by the predetermined time tb than the start (DHs2) of the second high sound pressure segment (both partial scenes are marked with diagonal lines in the diagram). It is noted that both values ta and tb are constants and the segment length tp of the extracted partial scenes is represented by: tp=ta-tb.

Then, the digest generating unit 35 generates digest playback information based on the extraction result of the partial scene extracting unit 34. When the partial scene extracting unit 34 extracts a plurality of partial scenes, the digest generating unit 35 sets an order of priority according to the segment length (hl) of the high sound pressure segment that is referenced for extracting a partial scene and incorporates the scene into the digest in the order of priority. For example, as shown in Fig. 2, when two partial scenes (first partial scene, second partial scene) are extracted, the partial scenes are extracted in the digest in the order of the segment lengths (in the order of: hl2, hl1) of the high sound pressure segments (first high sound pressure segment, second high sound pressure segment) corresponding to the partial scenes. Therefore, the order of the priority of the partial scenes is in the order of: the second partial scene, the first partial scene, and the segment data indicating the addresses of the starts (DPs2, DPs1) of the partial scenes and their segment lengths (tp2, tp1) is stored in the digest playback information storage unit 54 as digest playback information.

When a user instructs to play back a digest by using the UI input device 92 to search for a program that he/she wants to watch, the digest playback unit 62 reads out the segment corresponding to the segment data included in the digest playback information from the content recorded data read out from the content recorded data storage unit 51, and plays back the digest. Instead of generating a digest based on the digest playback information and the content recorded data, data for generating a digest may be generated separately, so that the digest can be played back based on the data.

When a user instructs to play back a content while playing back the digest, the content playback unit 61 plays back the content that is a source for generating the digest. The digest is not necessarily played back, and a content list is displayed on the display device 91, so that the content selected therefrom by a user can be played back.

The user may set a value of the high sound threshold value (THb), referenced for searching a high sound pressure segment, by using the UI input device 92. The value of the high sound threshold value being set is stored in the storage unit 50 and referred to when the high sound pressure segment searching unit 41 carries out the search. The user may set, not only the high sound threshold value, but also the overall length of the digest to be generated and values (ta and tb) for determining the start and the end of the partial scene to be extracted, using the UI input device 92. However, if the high sound threshold value, the overall length of the digest, and the values of ta and tb are not particularly set by a user, default setting values will be used.

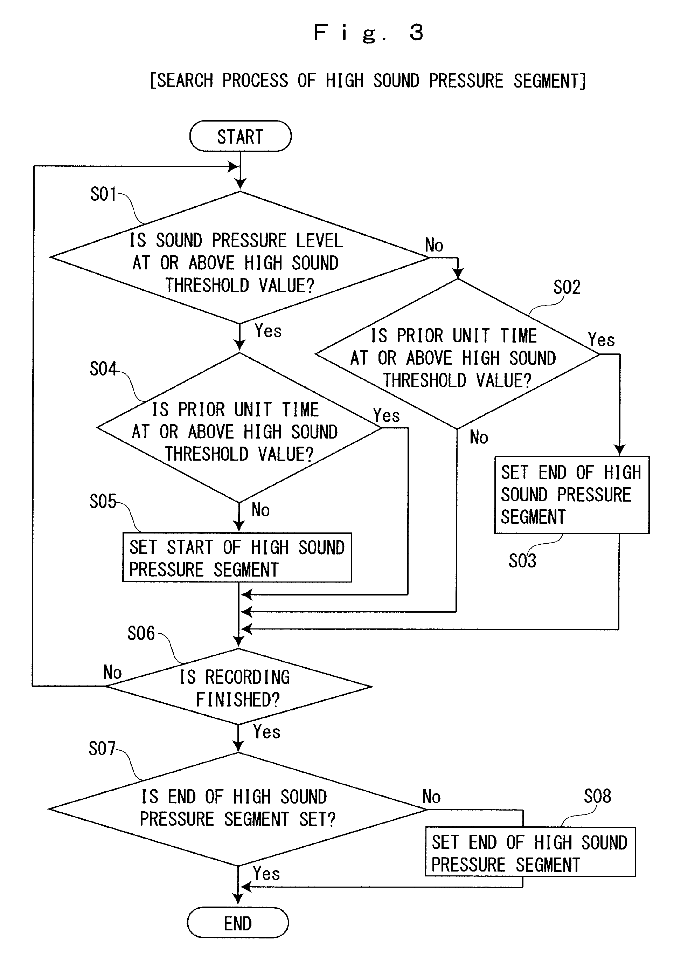

A search process of a high sound pressure segment by the high sound pressure segment searching unit 41 will now be explained with reference to the flowchart in Fig. 3. The process is executed at per unit time (for example, every 1/60 seconds), in synchronism with the recording of a content. As shown in the flowchart, whether the sound pressure level at a unit time is at or above the high sound threshold value being set is determined (S01). If it is not at or above the high sound threshold value (S01: No), whether the prior unit time is at or above the high sound threshold value is determined (S02). If it is at or above the high sound threshold value (S02: Yes), the end of the high sound pressure segment is set (S03).

If the sound pressure level of the unit time to be searched at this time is determined at or above the high sound threshold value (S01: Yes) at S01, whether the prior unit time is at or above the high sound threshold value is determined (S04). If it is not at or above the high sound threshold value (S04: No), the start of the high sound pressure segment is set (S05).

After setting the start or the end of the high sound pressure segment, or if the prior unit time is determined to be at or above the high sound threshold value at S04 (S04: Yes), or if the prior unit time is determined not to be at or above the high sound threshold value at S02 (S02: No), whether the recording of the content is finished is determined (S06). If it is not finished (S06: No), the above-described processes are repeated.

When the recording is finished (S06: Yes), whether the end of the high sound pressure segment is set is determined if the start of the high sound pressure segment is set at S05 (S07). If it is not set (S07: No), the end of the high sound pressure segment is set (S08), and the process is finished. In other words, when the recording is finished before setting the end of the high sound pressure segment, the end is set, and the process is finished.

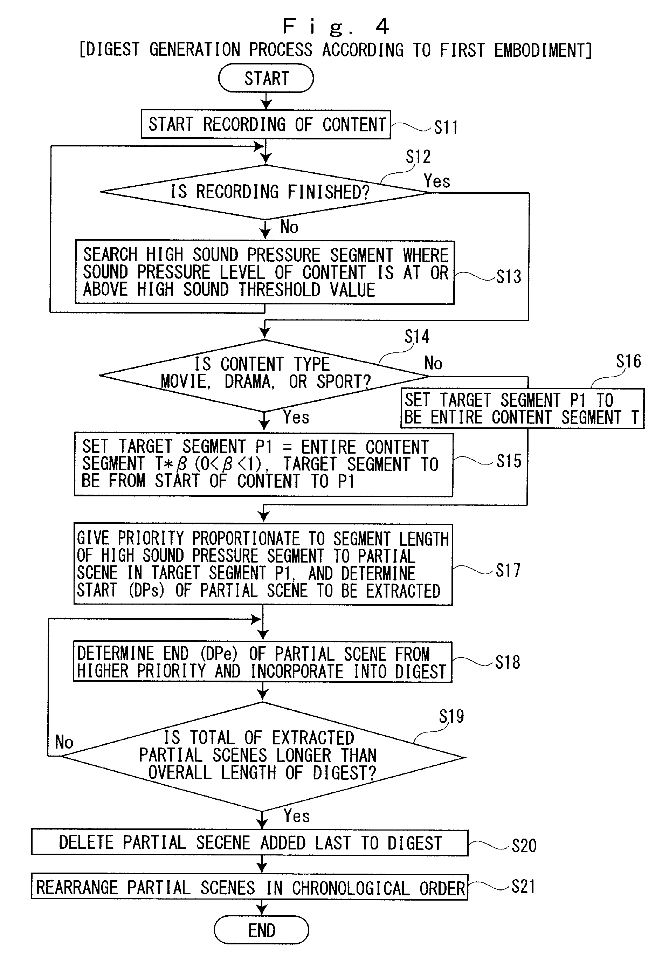

A digest generation process according to the present embodiment by the digest generating unit 35 will now be explained with reference to the flowchart in Fig. 4. As described above, the digest generation process starts with the start of recording (when the recording is instructed by a user, or at the set time in the case of a programmed recording) of the content (S11). Whether the recording is finished is determined periodically (S12). If the recording is not finished (S12: No), a high sound pressure segment where the sound pressure level of the content is at or above the high sound threshold value (THb) is searched (S13). The processes of S12 and S13 correspond to the search process of a high sound pressure segment shown in Fig. 4.

The search is repeated until the recording is finished (S12: Yes), and thereafter whether the content type is movie, drama, or sport is judged based on the acquired content associated information (S14). If the content type is judged to be one of these (S14: Yes), the segment length P1 of the target segment is calculated with the formula: P1 = Entire content segment T * Constant β, and the period starting from the start Ds of the content and lasting for the segment length P1 is set as the target segment (S15). If the content type is not judged to be any of these (S14: No), the entire content segment (segment length: T) is set as the target segment (S16).

Then, with respect to the partial scenes (first partial scene and second partial scene in the example shown in Fig. 2) in the target segment, an order of priority in proportion to the segment lengths (hl1, hl2) of the high sound pressure segments (first high sound pressure segment, second high sound pressure segment) that are referenced for extracting the partial scenes will be set, and the starts of the partial scenes to be extracted are determined (S17). In other words, in the example of Fig. 2, [DPs2, Dps1] are determined. Then, the end (DPe) of the partial scene is determined in the order of priority, and the partial scene is incorporated into the digest (incorporated into the digest playback information, S18). In other words, in the example of Fig. 2, [DPe2] is determined first, and then the second partial scene is incorporated into the digest.

Every time a partial scene is incorporated into the digest, whether the total of the extracted partial scenes (total of the segment lengths) exceeds the overall length of the digest (total playback time of the digest) is determined (S19). If it does not exceed (S19: No), the end of the partial scene with the next priority is determined, and the partial scene is incorporated into the digest (S18).

When the total of the extracted partial scenes exceeds the overall length of the digest (S19: Yes), the partial scene added last to the digest is deleted (S20). This is because the overall length of the digest is defined to be within a predetermined time in advance. If the time is unlimited (a user may set no limit of the playback time of the digest), all the extracted partial scenes may be incorporated into the digest, instead of S19 and S20. When all the partial scenes are incorporated (in the example shown in Fig. 2, the second partial scene and the first partial scenes are incorporated), if the overall length of the digest is defined within a predetermined time in advance, the process moves onto the next step (S21) even if the predetermined time defined as the overall length of the digest has not been reached.

Then, the partial scene extracted at last is rearranged in chronological order (S21), and the process is finished. In other words, in the example of Fig. 2, while the partial scenes are incorporated into the digest in the order of: the second partial scene, the first partial scene, they are rearranged into the order of: the first partial scene, the second partial scene.

According to the present embodiment, a target segment from which partial scenes, as elements to generate a digest of a content, are to be extracted is decided in accordance with the type (category) of the content. Therefore, if the content type is sport, drama, or the like that has a plot, the target segment is set to be the first half of the content in order to prevent the end from being included in the digest. Thus, suitable digests depending on content categories can be generated.

As described above, the segment (segment length: tp) from the start (DPs) that is earlier by the predetermined time ta than the start (DHs) of the high sound pressure segment to the end (DPe) that is earlier by the predetermined time tb (ta>tb≥0) than the start (DHs) of the high sound pressure segment is extracted as a partial scene to be incorporated into the digest. Accordingly, a scene before the highlight scene, in other words, a scene that fascinates the user most and an exciting scene can be incorporated into the digest. Because the highlight scene itself (for example, the result of a sport program or the end of a drama) is not included in the digest, the viewing incentive of the user will not be discouraged by watching the generated digest.

In the digest generation process, because the high sound pressure segment is searched along with the recording of the content, when the recording is finished, the searching of the high sound pressure segment has already finished. Accordingly, there is no need to read out the content again for searching the high sound pressure segment after the content is recorded. As a result, the time required for generating the digest can be reduced.

The playback of the digest is carried out by reading out the partial scene corresponding to the digest playback information (which is formed by at least one segment data (data that indicates an address of the start of the partial scene and its segment length)) from the content recorded data. Accordingly, there is no need to generate data for a digest by extracting a part of the content recorded data, and save the generated data separately from the content recorded data. Therefore, the capacity of the memory for saving the digest (digest playback information storage unit 53) is only required to save the digest playback information.

The partial scene to be incorporated into the digest is determined depending on the order of priority according to the segment length of the high sound pressure segment to be referenced for extracting the partial scene. Accordingly, a long highlight scene, in other words, a more exciting scene can be incorporated into the digest preferentially. As a result, the viewing incentive of the user can further be increased.

The extracted plurality of partial scenes are rearranged in chronological order. Accordingly, when the digest is played back, a sense of incongruity caused by continuously playing back partial scenes getting out of sequence can be removed. As a result, the digest closer to a program preview can be generated.

While the target segment is decided whether the content category as a content type is movie, drama, or sport in the above-described example, the value of β may be set for each category. In other words, the target segment may be set for each category. Alternatively, the target segment (the value of β) may be set in accordance with content types other than categories, classified by various criteria, such as what is in the content (e.g. keywords used for program search), the cast, broadcast date and time, or broadcast day of the week of the content.

While the target segment is set for the segment length P1 (P1=T*β) from the start of the content in the above-described example, any segment from the middle or the second half part of the content, for example, may be the target segment. The target segment is not limited to a single segment, and may be a plurality of segments.

While the segment length tp of a partial scene has a constant length (tp=ta-tb) irrespective of content types in the above-described example, the values ta and tb may be valuable depending on content categories. For example, if the content is a music program, a partial scene of some three to five seconds will show who appears in the scene. If the content is a sport program, a partial scene of some ten seconds will show the outline of the program through scenes including ball passes or pitching or comments of commentators, for example. By setting different segment lengths of partial scenes depending on content categories, partial scenes with suitable lengths depending on what is in the content can be extracted.

While a scene prior to a high sound pressure segment is extracted as a partial scene in the above-described example, partial scenes may be extracted in a different manner depending on whether the recorded content has been played back. In this case, it is preferable that partial scenes be extracted from the target segment except for high sound pressure segments if the recorded content has not been played back, and be extracted from the target segment including high sound pressure segments if the recorded content has been played back. In other words, partial scenes are extracted not to include highlight scenes (sound pressure segment) in order not to reduce a viewing incentive if the content has not been played back, whereas scenes are extracted to contain highlight scenes for better understanding of what is in the content if the content has been played back. Thus, appropriate digests can be generated depending on whether the content has been played back. This arrangement, however, requires updating of the digest playback information (for a digest used when the content has not been played back) created after recording of a content when the content is played back, or two pieces of the digest playback information, one of which is used when the content has not been played back and the other of which is used when the content has been played back.

While data indicating the start addresses of high sound pressure segments, a target segment, and partial scenes (digest playback information) and their segment lengths are stored in the above-described example, the start and end addresses of these segments may be stored alternatively.

While the content associated information is acquired along with the content in the above-described example, they may be acquired at different timings. For example, the content is acquired in advance and the content associated information associated with the acquired content may be read out from a predetermined Web site via networks, such as the Internet. Alternatively, content types may be inferred not through acquiring any content associated information but based on the video information and/or the audio information included in the content. It is possible to infer content types through comparison with predetermined feature quantities of content categories by a video or audio analysis technique.

While extracted partial scenes fall within the target segment are set to be extracted in the above-described example, if part of a partial scene falls within the target segment (i.e., part of that partial scene does not fall within the target segment), the partial scene may be extracted from its start to its end. In contrast, if a partial scene does not entirely fall within the target segment, the partial scene may not be extracted. Alternatively, whether a scene is extracted may be determined based on the rate of the part of the partial scene that falls within the target segment.

Alternatively, whether a scene is extracted may be determined based on whether any high sound pressure segment falls within the target segment. For example, if high sound pressure segments entirely falling within the target segment are set to be extracted, only the first partial scene (segment length: tp1, start: DPs1, end: DPe1) based on the first high sound pressure segment (start: DHs1, end: DHe1) included in the target segment is extracted in the example of Fig. 2, since the second high sound pressure segment (start: DHs2, end: DHe2) does not entirely fall within the target segment.

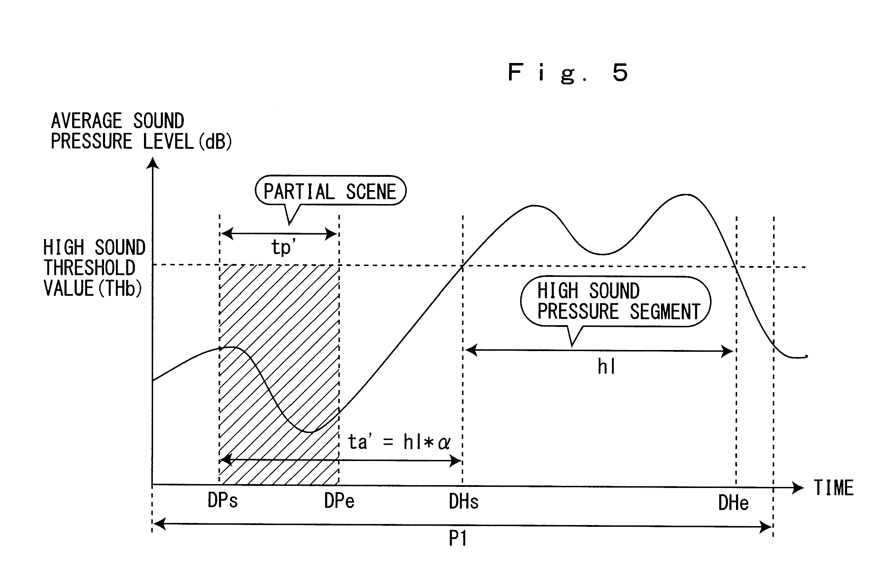

While the partial scene starts at the start (DPs) that is earlier by the predetermined time ta than the start (DHs) of the sound pressure segment (see Fig. 2) in the above-described example, the start (DPs) of the partial scene to be extracted may be determined in proportion to the segment length h1 of the high sound pressure segment that is referenced for extraction. This is because, when a highlight scene is long, it is generally considered that the prior scene is also long. In this case, a predetermined time ta' for determining the start (DPs) of the partial scene may be determined by the value calculated by multiplying the segment length hl (hl>0) of the high sound pressure segment by the constant α (0<α≤1) from the start (DHs) of the high sound pressure segment as shown in Fig. 5.

While the end (DPe) of the partial scene is the point that is earlier by the predetermined time tb than the start (DHs) of the high sound pressure segment in the above-described example, the end of the partial scene may be determined so as to be the point that a predetermined time tp' (tp≤hl*α) corresponding to the segment length of the partial scene has passed from the start (DPs) of the partial scene as shown in Fig. 5. With this configuration (similarly to the example of Fig. 2), partial scenes of a fixed length (segment length: tp') are extracted regardless of the length of the high sound pressure segment. As a result, when a plurality of partial scenes is included in the digest, a well-balanced digest with a fixed scene length can be generated.

The segment length of the partial scene may not be fixed, but may be varied according to the segment length hl of the high sound pressure segment. In this case, for example, the start (DPs) of the partial scene may be determined according to the segment length hl of the high sound pressure segment (point that is earlier by (hl*α) than the start (DHs) of the high sound pressure segment), and the end (DPe) of the partial scene may be determined so as to be the point that is earlier by the predetermined time tb than the start (DHs) of the high sound pressure segment (not shown). In this case, when the value of the predetermined time tb is 0, the segment length of the partial scene can be determined in proportion to the segment length hl of the high sound pressure segment. With this configuration, a partial scene considered to be fascinating can be played back longer according to the length of the highlight scene, as one scene in the digest.

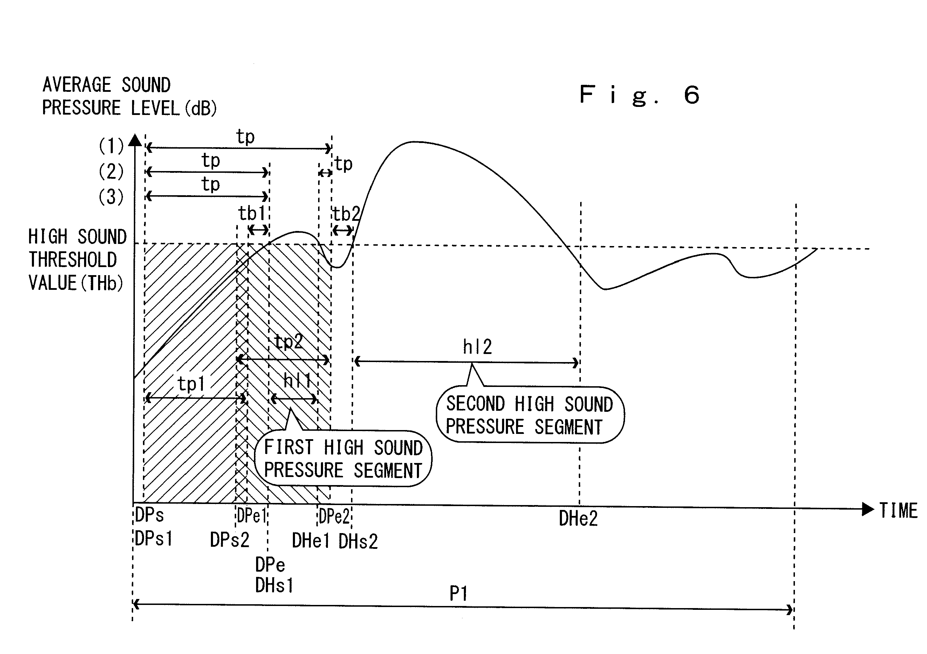

In the above-described example, the partial scene is extracted by referencing to the start (DHs) of the high sound pressure segment. Accordingly, there may be a case where the extracted partial scenes get overlapped depending on the values of the predetermined times ta and tb, and the sound pressure level waveform. As shown in the example of Fig. 6, the latter half of the first partial scene (segment length: tp1, diagonal lines from top right to bottom left) extracted based on the first high sound pressure segment (segment length: h11) and the first half of the second partial scene (segment length: tp2) extracted based on the second high sound pressure segment (segment length: h12, diagonal lines from top left to bottom right) are overlapped. In this case, it is preferable to extract from the start (DPs1) of the first partial scene to the end (DPe2) of the second partial scene as one partial scene (see (1) in the diagram).

In the example of the diagram, the second partial scene (start: DPs2, end: DPe2) is overlapped with the first high sound pressure segment (start: DHs1, end: DHe1). Accordingly, it is preferable to delete the overlapped segment (DHs1 to DHe1) from the partial scene (see (2) in the diagram).

After this deletion, the partial scenes extracted are DPs1 to DHs1 and DHe1 to DPe2. However, when the segment length of the extracted partial scene is only a small fraction (to an extent that a human cannot recognize the content by viewing or listening, for example, 2 seconds or less), such as DHe1 to DPe2, it is preferable not to be extracted as a partial scene. Therefore, in the example of Fig. 6, it is preferable to eventually extract the segment DPs1 to DHs1 as the partial scene (segment length: tp, start: DPs, end: DPe) (see (3) in the diagram).

With this configuration, even if the extracted partial scenes are overlapped, the same scenes will not be included in the digest in an overlapping manner. When the high sound pressure segment is included in the extracted partial scene, the scene overlapped with the high sound pressure segment will be extracted. Because the result of the content is not learned, the viewing incentive of the user will not be discouraged. Moreover, because a small fraction of the scene is not extracted, the digest with which the user will not have a sense of incongruity can be generated.

In the above-described example, as shown in Fig. 2, a higher priority is given to a partial scene with a longer segment length of the high sound pressure segment. On the contrary, a scene with a shorter segment length of the high sound pressure segment may be given higher priority. With this configuration, by preferentially incorporating a scene with a short highlight scene into the digest, the digest with which the ending of the content is harder to guess can be generated.

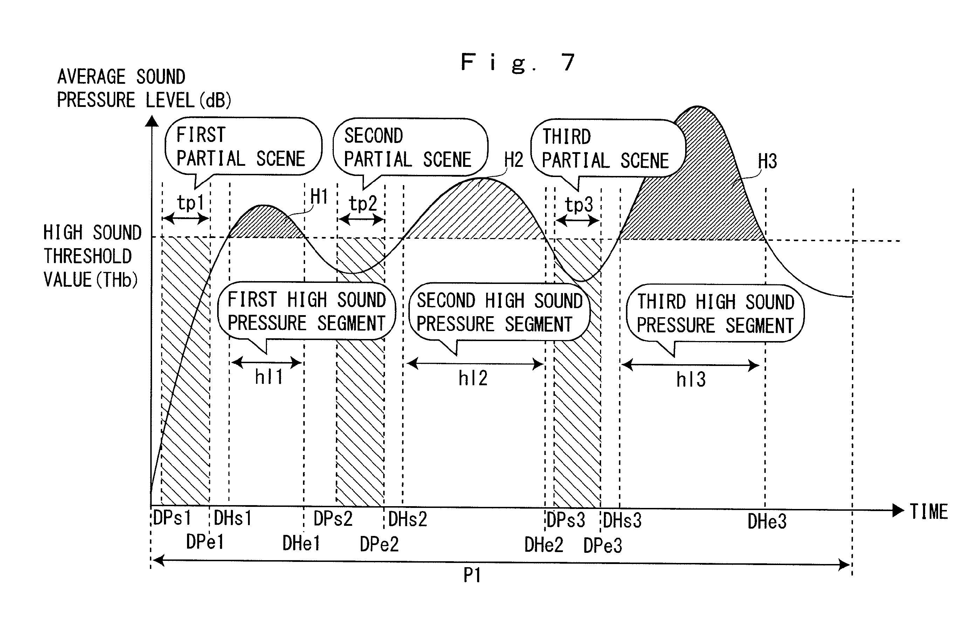

As shown in Fig. 7, not only is a scene with the long segment length hl given priority, but the priority may be determined depending on the value of the sound pressure level exceeding the high sound threshold value (THb). In other words, the priority may be determined by the sum total (corresponds to an area of shaded sections H1, H2, and H3 in the diagram) of the sound pressure level at per unit time in the high sound pressure segment. Therefore, as shown in the example of Fig. 7, the priority is in the order of: the third partial scene, the second partial scene, the first partial scene. With this configuration, the partial scene to be extracted may be determined not only by the length of excitement, but by the extent of excitement.

In the above-described example, the high sound pressure segment is searched based on the sound pressure level. When the content associated information includes metadata, the highlight scene may be searched also based on the metadata. For example, if the content is a video of a soccer game, since information showing the flow of the game, such as ball shooting and corner kicks is recorded for each scene in the metadata, a highlight scene may be searched using the detailed information of each scene, and a partial scene may be extracted based on the highlight scene. With this configuration, a highlight scene can be searched more accurately.

The highlight scene may be searched, based not only on the metadata, but also on video information. In this case, for example, by using video analysis, it is preferable to examine, for example, a scene including a face region, a scene with quick scene changes, or a scene with character information such as a subtitle in a video, and then preferentially include the scenes in the partial scene.

While partial scenes are extracted so as not to include high sound pressure segments in the above-described example, one or more any partial scenes may be extracted from the target segment regardless of high sound pressure segments.

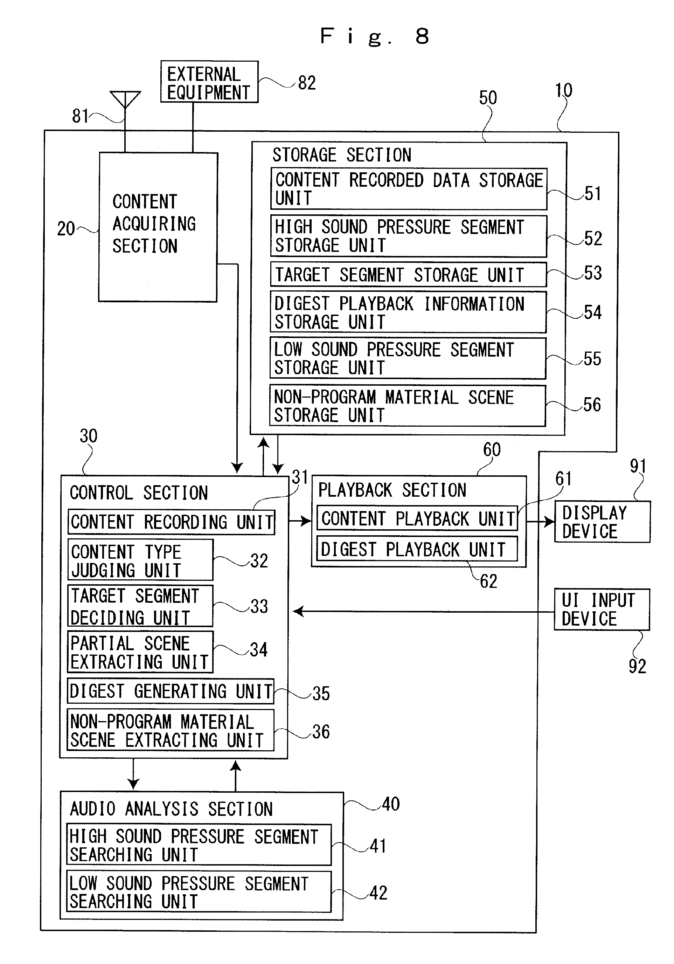

Next, a second embodiment of the present invention will now be explained with reference to Figs. 8 to 10. In the above-described embodiment, the target segment from which partial scenes are extracted is determined based on the type of an acquired content. In the present embodiment, if a content is a predetermined content type, a predetermined segment immediately after a non-program material scene including a commercial scene is preferentially extracted as a partial scene. The different points from the first embodiment will mainly be explained.

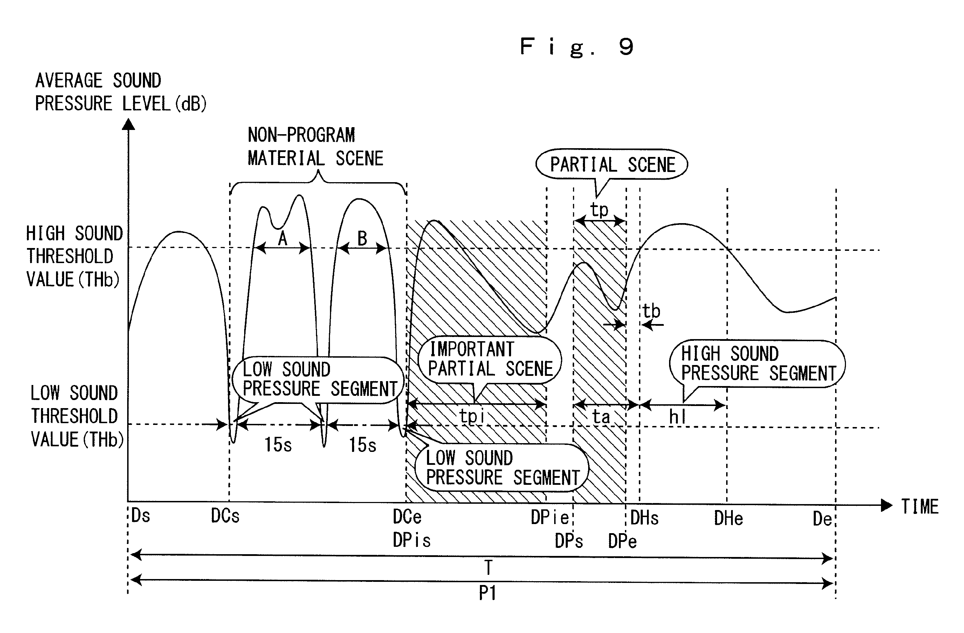

Fig. 8 is a block configuration diagram according to the present embodiment. Fig. 9 is a diagram of a sound pressure level waveform for illustrating the present embodiment. Referring to Fig. 8, the recording and playback device 10 according to the present embodiment differs from the device shown in the block configuration diagram according to the first embodiment in that the control section 30 includes a non-program material scene extracting unit 36, the audio analysis section includes a low sound pressure segment searching unit 42, and the storage section 50 includes a low sound pressure segment storage unit 55 and a non-program material scene storage unit 56.

The low sound pressure segment searching unit 42 searches a low sound pressure segment where a sound pressure level calculated based on the audio information is at or below a predetermined low sound threshold value (THs) in the content (see Fig. 9). The predetermined low sound threshold value (THs) is valuable by user setting, and is set at a default unless otherwise specified. The process operated by the low sound pressure segment searching unit 42 corresponds to the process of searching a high sound pressure segment shown in Fig. 3 in which the "high sound pressure segment" is changed to the "low sound pressure segment", and "at or above the high sound threshold value" is changed to "at or low sound threshold value". In other words, because the substantial processing contents are the same, the detailed description thereof will be omitted.

The low sound pressure segment storage unit 55 stores the search result of the low sound pressure segment searching unit 42, in other words, the data indicating the address of the start of each low sound pressure segment and its segment length.

The non-program material scene extracting unit 36 extracts a non-program material scene from the entire content segment, based on the search result of the high sound pressure segment searching unit 41 and the low sound pressure segment searching unit 42. Specifically, based on the data stored in the low sound pressure segment storage unit 55, a segment where low sound pressure segments exist at a predetermined interval (such as a 15-second interval) is determined to be a commercial scene, and the start (DCs) of the first low sound pressure segment to the end (DCe) of the last low sound pressure segment is extracted as a non-program material scene (see Fig 9).

The non-program material scene storage unit 56 stores the extraction result of the non-program material scene extracting unit 36, in other words, the data that indicates the address of the start of each non-program material scene and its segment length. The non-program material scene refers to a segment considered not to be a program material of a content, such as a commercial scene, a weather forecast, and a segment of a program.

If content type judging unit 32 judges that the content is a predetermined content type (e.g. cartoon), the partial scene extracting unit 34 according to the present embodiment extracts a predetermined segment immediately after the non-program material scene extracted by the non-program material scene extracting unit 36 as an important partial scene (segment length: tpi, start: DPis, end: DPie) as shown in Fig. 9. If the content is judged not to be a predetermined content type, a partial scene only based on high sound pressure segments as described in the first embodiment is extracted. It is noted that the high sound pressure segments (A and B in the diagram) are excluded from the target segment from which partial scenes are to be extracted in the present embodiment.

The digest generating unit 35 according to the present embodiment sets the priority of the important partial scene to immediately after the non-program material scene to the maximum value, and generates digest playback information (incorporate into the digest). This is because, for example, when the content is a cartoon program, a title and a subtitle of the cartoon are often displayed immediately after commercial messages. By including these in the digest, a user can understand the content more accurately. When a plurality of important partial scenes is extracted from the target segment, the priority is determined in chronological order. In other words, when a program is recorded from 0 o'clock to 1 o'clock with its entire segment being the target segment (the content type is other than movie, drama, and sport), and commercial messages run every 15 minutes, the scene immediately after the commercial message around 0:15 is extracted as an important partial scene with the maximum priority, and the scene immediately after the commercial message around 0:30 is extracted as an important partial scene with the secondary priority.

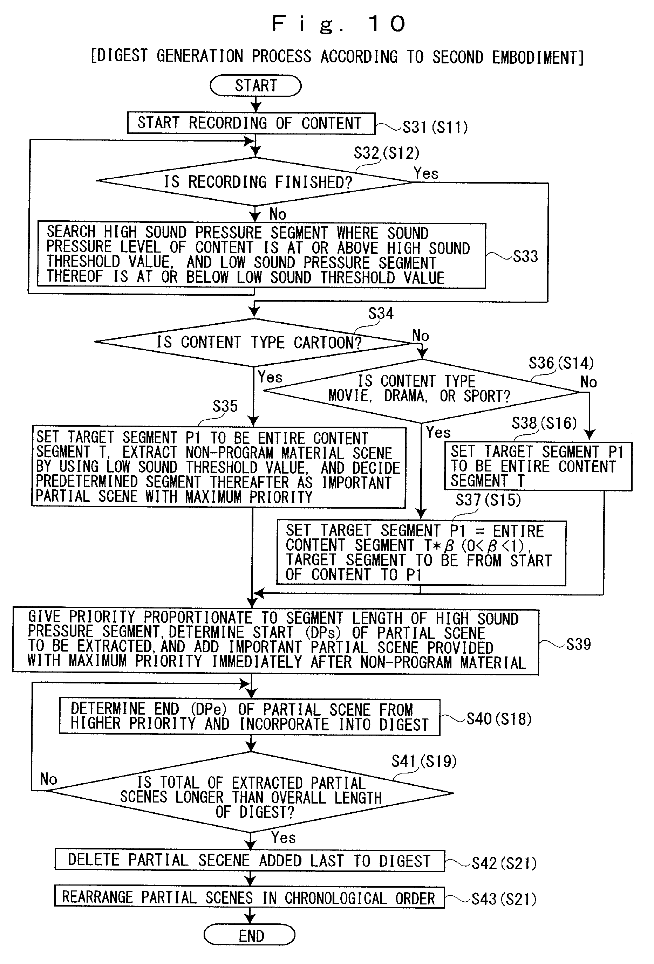

A digest generation process of the present embodiment by the digest generating unit 35 will now be explained with reference to the flowchart in Fig. 10. The reference numerals at each process shown in brackets mean that they are the same processes as to the reference numerals shown in the flowchart in Fig. 4. Therefore, the detailed description thereof will be omitted.

In the present embodiment, the digest generation process also starts with the start of recording of the content (S31). Until the recording is finished, a high sound pressure segment where the sound pressure level of the content is at or above the high sound threshold value (THb) and a low sound pressure segment where the sound pressure level is at or below the low sound threshold value (THs) is searched (S32 and S33).

When the recording is finished (S32: Yes), whether the content type is cartoon is judged (S34), and if it is cartoon (S34: Yes), the entire content segment (segment length: P1) is determined to be the target segment (segment length: T). Further, a non-program material scene is extracted based on the search result of low sound pressure segments, and a predetermined subsequent segment is determined to be a partial scene with the maximum priority (S35). Fig. 9 shows an example when the content type is cartoon.

When the content type is not cartoon (S34: No), the content type is whether movie, drama, or sport is judged (S36). If content type is either of these (S36: Yes), the segment length P1 of the target segment is calculated from the formula: P1 = Entire content segment T * Constant β, and a period starting from the start Ds of the content and lasting for the segment length P1 is determined to be the target segment (S37). On the other, if the content type is not judged to be either of these (S36: No), the entire content segment (segment length: T) is determined to be the target segment (S38).

The partial scenes are then extracted and the priority is given to the partial scenes based on the search result of high sound pressure segments. Important partial scenes are also extracted from the detection result of non-program material scenes, and their priority is set to the maximum. The starts (DPs, DPis) of the respective partial scenes are determined according to the priority (S39). In the order of higher priority, the ends (DPe, DPie) of the partial scenes are determined and incorporated into the digest (S40). In other words, when the important partial scene is present as in the example of Fig. 9, the start [DPis] of the important partial scene and the end [DPie] of the important partial scene are determined at first, and then the important partial scene is incorporated into the digest.

Subsequently, whether the total (total of segment lengths) of the extracted partial scenes exceeds the overall length of the digest is judged (S41). If not exceed (S41: No), the end of the partial scene with the secondary priority is determined and incorporated into the digest (S40). In other words, in the example of Fig. 9, the start [DPs] of the partial scene and the end [DPe] of the partial scene are determined, and the partial scene is incorporated into the digest.

If the total of the extracted partial scenes exceeds the overall length of the digest (S41: Yes), the partial scene added last to the digest is deleted (S42). If incorporation of all important partial scenes or partial scenes is finished, the process moves onto S43, skipping S41 and S42. Then, the extracted important partial scenes and/or partial scenes are rearranged in chronological order (S43), and the process is finished.

As described as the above, according to the present embodiment, if the content type is a predetermined type, a scene immediately after a non-program material scene extracted based on the search result of low sound pressure segments is included with high priority as an important scene in the digest. Accordingly, an appropriate digest can be generated depending on the content type by, for example, including a scene immediately after commercial messages with high priority in the digest if the content type is cartoon.

While the target segment is set to be the entire content segment if the content type is cartoon (S35) in the above-described example, the target segment may be limited to P1 (refer to S37) since it is possibly undesirable to include the end of the cartoon program like in the case of movie or drama.

While in the above-described example, the segment having low sound pressure segments at a predetermined interval is extracted as a non-program material scene, other various commercial message detection methods that have been developed may also be applied to extract a non-program material scene. In other words, a commercial scene detected depending on a change of scenes based on video information or a broadcasting mode (whether a bilingual broadcast, whether a stereo broadcast, and the like) may be extracted as a non-program material scene.

While both the target segment from which partial scenes are to be extracted and the way in which partial scenes are extracted (whether a predetermined segment immediately after a non-program material scene is extracted) are changed depending on the content type in the above-described example, the target segment may be set to the entire content segment irrespective of the content type. In other words, only the way in which partial scenes are extracted may be changed depending on the content type.

Other various modifications disclosed in the first embodiment may also be applied to the present embodiment.

As explained in the first embodiment and the second embodiment, according to the present invention, a digest that is suitable for a content type can be generated if the content is a predetermined type (e.g. movie, drama, sport), since a target segment from which partial scenes as elements for generating the digest of the content are extracted is determined (e.g. the first half of the content) depending on the content type. If a content is a predetermined type (may or may not the same as the above-mentioned predetermined type, e.g. cartoon), a scene immediately after a commercial scene (non-program material scene) is extracted as an important partial scene, a digest that is further suitable for a content type can be generated.

In the above-described each embodiment, the explanation is made for generating the digest of the content including both video information and audio information. The present invention can also be applied for a content that only includes audio information (music and radio programs, for example) as long as it is associated with content associated information. The present invention can also be applied for a content that only includes video information and does not include audio information (silent movies, for example). In the case of such a content that only includes video information, a highlight scene is detected based on the video analysis result of the video information and/or the metadata explained in the latter half of the first embodiment, and a partial scene is extracted based on the detection result.

Also, each section, unit, and function included in the recording and playback device 10 according to each of the embodiments can be provided as a program. The program can also be stored and provided in a recording medium (not shown). Examples of such recording medium include: a CD-ROM, a flash ROM, a memory card (a compact flash (trade mark), smart media, a memory stick, and the like), a compact disk, a magneto-optical disk, a digital versatile disk, a flexible disk, and a hard disk.

The device configuration, the processing steps, and the like may not be limited to the above-described embodiments, but may be modified suitably within the spirit and scope of the present invention. The digest generation function of the present invention may be installed on a video recorder, a DVD recorder, a personal computer, and the like, other than the recording and playback device 10.

## Claims

1. A digest generating device comprising:
content acquiring means that acquires a content including at least one of video information and audio information and content associated information associated with the content;
content type judging means that judges a content type categorized according to what is in the content based on the content associated information;
target segment deciding means that decides a target segment from an entire content segment, in full or part thereof, along a time axis of the content depending on judgment of the content type judging means;
partial scene extracting means that extracts a partial scene being an element for generating a digest of the content from the decided target segment; and
digest generating means that generates the digest by using the extracted partial scene.

2. The digest generating device according to claim 1, wherein the target segment is a segment starting from start of the content and lasting for a time period calculated by multiplying the entire content segment by a constant β (0<β≤1), and
the target segment deciding means decides the target segment based on the constant β that is valuable depending on the content type judged by content type judging means.

3. The digest generating device according to claim 1, wherein the partial scene extracting means extracts a partial scene having a segment length of a predetermined time period tp (tp>0), the predetermined time period tp being valuable depending on the content type judged by content type judging means.

4. The digest generating device according to claim 1, further comprising:
highlight segment searching means that searches a highlight segment including a highlight scene from the entire content segment based on at least one of the video information and the audio information, wherein
the partial scene extracting means extracts the partial scene from a remaining segment excluding the highlight segment from the target segment.

5. The digest generating device according to claim 4, further comprising:
content recording means that records the acquired content; and
playback means that plays back the recorded content, wherein
the partial scene extracting means judges whether the recorded content has been played back, extracts the partial scene from the remaining segment excluding the highlight segment from the target segment when judging that the content has not been played back, and extracts the partial scene including the highlight segment when judging that the content has been played back.

6. The digest generating device according to claim 1, further comprising:
digest playback means that plays back a digest; wherein
the digest generating means generates digest playback information formed by segment data that indicates an address of start of the extracted partial scene and a segment length thereof, and
the digest playback means plays back the digest based on recorded data of the content by the content recording means and the digest playback information.

7. The digest generating device according to claim 1, wherein the content acquiring means acquires metadata recorded for each scene in the content as at least part of the content associated information.

8. The digest generating device according to claim 1, further comprising:
EPG receiving means that receives EPG data; wherein
the content acquiring means acquires program information included in the EPG data as at least part of the content associated information.

9. The digest generating device according to claim 1, wherein the digest generating means rearranges, when generating the digest by using a plurality of partial scenes, the plurality of partial scenes in chronological order.

10. A program that enables a computer to function as each means in the digest generating device according to any one of claims 1 through 9.
